# EUROPÄISCHE PATENTSCHRIFT

(11) **EP 0 773 103 B1**
(45) Veröffentlichungstag und Bekanntmachung des Hinweises auf die Patenterteilung: **24.04.2002**
(21) Anmeldenummer: 96116455.5
(22) Anmeldetag: 15.10.1996
(51) Int. Cl.: B32B 31/10, B31D 1/02, G01B 11/00, B65C 9/40

(54) **Einrichtung zur Verarbeitung von Lagenmaterial**
Device for handling of ply-material
Dispositif pour traiter un matériau en couche

(30) Priorität: 10.11.1995 DE 19541977
(43) Veröffentlichungstag der Anmeldung: 14.05.1997
(73) Patentinhaber: BIELOMATIK LEUZE GmbH + Co., D-72639 Neuffen (DE)
(72) Erfinder: Bohn, Martin, 71762 Reutlingen (DE); Scheller, Wolfgang, 97241 Oberpleichfeld (DE); Hörz, Klaus, 72639 Neuffen (DE)
(74) Vertreter: Patentanwälte Ruff, Wilhelm, Beier, Dauster & Partner

(56) Entgegenhaltungen:
- EP-A- 0 299 316
- EP-A- 0 734 953
- DE-A- 4 016 150
- US-A- 3 522 129
- PATENT ABSTRACTS OF JAPAN vol. 009, no. 033 (P-334), 13.Februar 1985 & JP 59 175078 A (TOPPAN INSATSU KK), 3.Oktober 1984,

## Beschreibung

Die Erfindung betrifft eine Einrichtung zur Bearbeitung von Lagenmaterial, insbesondere zum lagegerechten Zusammensetzen oder dergleichen von Materialteilen aus z. B. folien- bzw. papierähnlichem Werkstoff. Dadurch können zum Beispiel ein oder mehrere Lagenteile, wie Etiketten, Schutzfolien oder dergleichen auf einen oder mehrere Trägerteile aus flächigem Material aufgebracht werden. Der jeweilige Materialteil kann durch eine kontinuierliche Materialbahn oder einzelne Abschnitte, wie Blattlagen, gebildet und jeweils in Laufrichtung oder quer dazu größer als der andere Teil bzw. das Fügefeld oder das Deckfeld sein, welches vom kleineren Materialteil nach dem Zusammenfügen abgedeckt ist. Die beiden Materialteile können haftend bzw. scherfest sowie parallel unmittelbar aneinander anliegend miteinander verbunden werden, z. B. über eine gegenüber ihnen wesentlich dünnere Haftschicht, die aus einem Kalt- oder einem Heißleim bestehen kann.

Die Erfindung betrifft insbesondere eine Einrichtung nach der EP-A 692 375 auf welche zur Einbeziehung der Ausbildungen und Wirkungen in die vorliegende Erfindung Bezug genommen wird. Die Materialteile, Füge- und/oder Deckfelder sind meist rechtwinkelig bzw. durchgehend von zueinander parallelen, geradlinigen Kanten oder Randzonen begrenzt. Die Lagenteile können endlos von einem Rollen-Speicher zugeführt bzw. als vorgestanzte Etiketten auf den Trägerteil übertragen werden. Ist der Trägerteil eine Endlosbahn oder dergleichen, die in Laufrichtung beiderseits der Fügestelle bzw. der Einrichtung unter Zugspannung in Fördereinheiten festgelegt ist, so kann diese Bahn nach dem Aufbringen der Lagenteile durch Längsund/oder Quertrennung in einzelne Blattlagen unterteilt werden. Die Trennlinien sind bereits vor und während des Aufbringens der Lagenteile gegenüber den genannten Feldern vorgegeben, z.B. in Form von Perforationen. Hierbei können in Laufrichtung hinter und/oder nebeneinander aufgebrachte Lagenteile bzw. Füge- und/oder Deckfelder jeweils gleiche oder unterschiedliche Größe bzw. Form haben.

Die Materialteile sollen nach dem Zusammensetzen zueinander eine Soll-Ausrichtung einnehmen, die innerhalb eines Toleranzfeldes liegt, welches z.B. gegenüber einer Ideal-Ausrichtung eine Verschiebung bzw. Verdrehung nach allen Richtungen von weniger als 1 oder 1/2 mm zuläßt. Um mehr als diese Toleranz bzw. mehr als einen Millimeter und weniger als 5 bzw. 3 Millimeter sind zweckmäßig die Randlinien des Deckfeldes gegenüber denen des Fügefeldes nach außen versetzt, so daß der Rand der kleineren Materiallage, in der Regel des Lagenteiles, bis über das Fuge- bzw. Haftfeld geringfügig hinausreicht. Ergibt sich, z.B. durch eine Fehlfunktion der Zuführungen der Materialteile, insbesondere des Lagenteiles, zur Fügestelle eine von der Soll-Ausrichtung entsprechend stark abweichende Ausrichtung, so wird die Fügefläche beim Zusammensetzen der Materialteile nicht vollständig abgedeckt, sondern bleibt teilweise freiliegend. Solche unabgedeckten Bereiche können bei der Weiterverarbeitung der Materialteile bzw. des Trägerteiles in den entsprechenden Arbeitsstationen zu Störungen, z. B. durch Anhaftungen an Maschinenteilen, führen.

Es ist bereits eine Prüfeinrichtung für Magnetbandkassetten bekannt (EP 299316), bei der die vordere und hintere Stirnkante eines Etiketts abgetastet wird. Dadurch kann erkannt werden, ob das Etikett an der richtigen Stelle sitzt.

Weiterhin ist bekannt eine Einrichtung zum Feststellen der Anordnung von Etiketten bei Filmkassetten (nachveröffentlichte EP 734953). Hierbei wird nur ein seitlicher Versatz der Etiketten überprüft.

Bei einer weiteren Vorrichtung zum Ausrichten von flächigem Material ist vorgesehen, das Vorhandensein der Stirnkante des aufzubringenden Materials zu erkennen (US-3522129).

Bei einer weiteren Vorrichtung zur Überprüfung von Kassetten (JP 59175078) wird die gesamte Kassette mit Hilfe einer TV-Kamera aufgenommen und mit einem Bezugsbild verglichen.

Bei einer weiteren Vorrichtung zur Kontrolle der Platzierung eines Etiketts auf einem Behältnis (DE 4016150) wird eine Markierung auf dem Behälter und eine Markierung auf dem Etikett abgetastet.

Der Erfindung liegt die Aufgabe zu Grunde, eine Einrichtung zur Verarbeitung von Lagenmaterial zu schaffen, bei welcher Nachteile bekannter Ausbildungen, insbesondere der beschriebenen Art vermieden sind. Weitere Aufgaben können darin bestehen die Funktionstüchtigkeit der Einrichtung zu erhöhen, ihren Betrieb bzw. ihre Bedienung zu vereinfachen und eine einfache Ausbildung zu gewährleisten.

Erfindungsgemäß sind Mittel vorgesehen, welche erfassen bzw. erkennen, ob bzw. inwieweit die Materialteile nach dem Zusammensetzen die gewünschte Soll-Ausrichtung zueinander einnehmen bzw. welche ggf. davon abweichende Ist-Ausrichtung sie einnehmen. Zweckmäßig wird dabei nur dann ein Signalimpuls ausgelöst, wenn eine Fehl-Ausrichtung vorliegt, während im Falle von bestimmungsgemäßen Soll-Ausrichtungen ein solcher Impulse nicht gegeben wird. Die Erkennungsmittel können auf Signal- bzw. Steuermittel wirken, welche z. B. die Förderbewegung eines oder beider Materialteile verändern bzw. stillsetzen, die fehlerhaft zusammengesetzte Lageneinheit unmittelbar nach der Fügestelle ausschleusen, enge Durchlaufspalte für die Materialteile aufweiten, wenigstens den unabgedeckten Teil des Haftfeldes mit einem Zusatz-Lagenteil abdecken, eine akustische, optische oder ähnliche Anzeige betätigen oder dergleichen. Zweckmäßig jedoch wird unmittelbar mit dem Erkennen einer Fehl-Ausrichtung die gesamte Einrichtung stillgesetzt, die von einem Materialspei-cher für die Zuführung der Trägerbahn über die Förderbahn bis zu einer Sammelstation für die fertigverarbeiteten Lageneinheiten reicht.

Die Ausrichtung kann in einfacher Weise anhand von Markierungen bzw. Marken, wie z. B. gegenüber der Oberfläche des zugehörigen Materialteiles optisch kontrastierenden Druckmarken, erkannt werden, welche im Falle der Soll-Ausrichtung zwischen den einander zugekehrten Fügeseiten der Materialteile abgedeckt sind und im Falle einer Fehl-Ausrichtung nicht abgedeckt und daher von einem Sensor der Erkennungsmittel erfaßt werden. Die zu erfassenden Marken können dabei in Laufrichtung am vorderen und/oder am hinteren Ende des vorgegebenen Deckfeldes liegen. Zweckmäßig liegen die zur Erfassung bestimmten Marken, z. B. Winkelmarken, im Bereich der Eckzonen des Deckfeldes nach außen versetzt gegenüber Marken der genannten Art, welche die Lage des Füge- bzw. Leimfeldes bestimmen und in einer der Fügestelle bzw. der Fügestation vorgeschalteten Leim-Auftragsstation dazu dienen die Haftbeschichtung herzustellen bzw. aufzutragen. Auch diese Fügefeld-Marken können zur Erfassung durch die Erkennungsmittel vorgesehen sein.

Nehmen die Materialteile bereits vor dem Zusammensetzen bzw. -fügen gegenüber gesonderten Förderern genaue Ausrichtungen ein, welche auf Grund ihrer gegebenen Förderbewegung die gegenseitige Ist-Ausrichtung nach dem Zusammensetzen bestimmen, so könnten die Erkennungsmittel die Ausrichtungen auch bereits unmittelbar vor dem Zusammensetzen erfassen und ggf. die genannten Folgewirkungen auslösen, bevor die Materialteile zusammengesetzt bzw. der Lagenteil und/oder das Deckfeld die Fügestelle erreicht haben. Der Sensor, beispielsweise ein optoelektronischer Detektor, wie eine Fotozelle, tastet den Trägerteil während des Durchlaufes berührungsfrei im Bereich eines schmalen, zur Laufrichtung parallelen Streifenfeldes ab. Zur Justierung bzw. Umstellung auf unterschiedliche Relativlagen, Größen oder dergleichen des Deckfeldes ist der Sensor zweckmäßig stufenlos verstellbar und in jeder Stellung gegenüber einem Einrichtungsgestell festsetzbar. Der Sensor kann über die Arbeitsbreite bzw. die Breite des Trägerteiles und/oder rechtwinklig dazu in Laufrichtung jeweils parallel zur Förderebene, aber auch quer zur Förderebene verstellbar sein.

Um Fehlerkennungen zu vermeiden, z. B. wenn der Materialoder Trägerteil zusätzlich zu den Marken außerhalb des Deckfeldes mit sonstigen, optisch kontrastierenden und daher den Sensor beeinflußenden Bedruckungen versehen ist, kann der Sensor mit einer geeigeneten Steuerung intermittierend aktiviert und deaktiviert werden. Nur im aktivierten Zustand kann er dann die genannte Erkennung ausführen. Durch Steuermittel, welche ggf. die Marke vor Erreichen der Erkennungsstelle bzw. der Fügestelle erfassen wird der Sensor bzw. werden die Erkennungsmittel nur während derjenigen Zeit aktiviert, während welcher der die markentragende Abschnitt die Erkennungsstelle durchläuft.

Diese und weitere Merkmale gehen aus den Ansprüchen und aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden in folgenden näher erläutert.

In den Zeichnungen zeigen:
- Fig. 1: einen Ausschnitt einer erfindungsgemäßen Einrichtung im Querschnitt rechtwinklig zur Förderebene und parallel zur Laufrichtung,
- Fig. 2: eine schematische Darstellung eines Teiles der Einrichtung gemäß Fig. 1,
- Fig. 3: einen Ausschnitt der Fig. 2 in Draufsicht und vergrößerter Darstellung,
- Fig. 4: eine weitere Ausführungsform in einer Draufsicht gemäß Fig. 3, und
- Fig. 5: die Draufsicht gemäß Fig. 4, jedoch bei gegenseitiger Fehl-Ausrichtung der Materialteile.

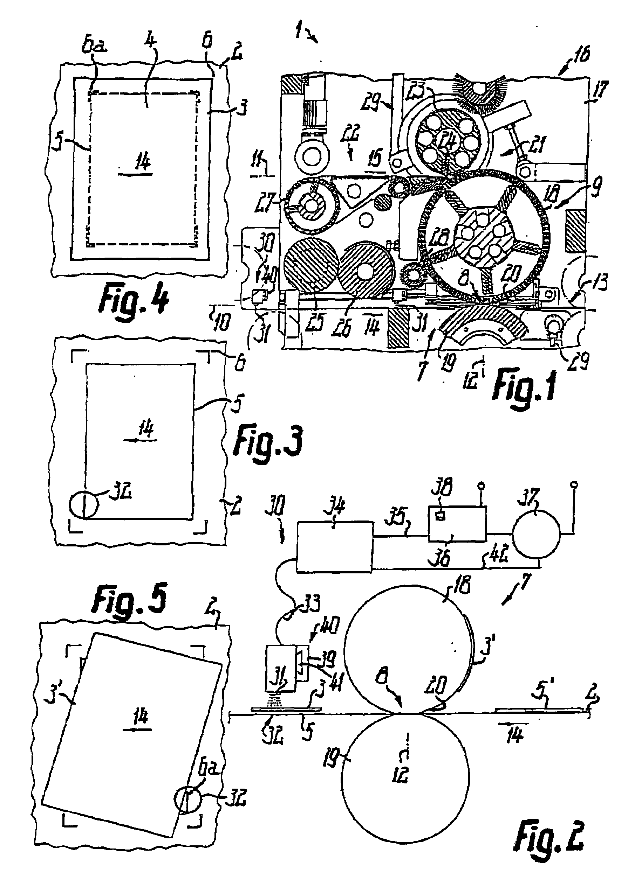

Die Einrichtung 1 dient als vormontierte Einheit zum flächengleichen Zusammenfügen von Materialteilen, nämlich einer kontinuierlich unter Zugspannung geförderten Trägerbahn 2 aus Papier und einem Lagenteil 3. Der gegenüber der Trägerbahn 2 in und quer zur Laufrichtung wesentlich kleinere Lagenteil 3 ist dafür bestimmt, eine seiner Größe und Form gleichendes Deckfeld 4 auf einer Seite der Trägerbahn 2 und mit von Abstand deren Längskanten abzudecken. Ein vollstänig innerhalb dieses Deckfeldes 4 liegendes und von allen Außenbegrenzungen des Deckfeldes 4 durchgehend Abstand aufweisendes Fügefeld 5 dient zur haftenden Verbindung der einander zugekehrten Seiten der Materialteile 2, 3 und kann z. B. durch eine hauchdünne Leimschicht gebildet sein. In allen vier Eckbereichen seiner Außenbegrenzung ist das Deckfeld 4 wie auch das Fügefeld 5 auf der zugehörigen Oberfläche der Trägerbahn 2 jeweils durch Bezugsstellen bzw. durch Marken 6, 6a markiert. Jede Marke 6, 6a ist winkelförmig und bildet zwei parallel und rechtwinklig zur Laufrichtung liegende Markenbalken. Die Leimschicht 5 kann Abstand von den zugehörigen Markierungen 6a haben, steht gegenüber diesen jedoch nach außen nicht in das restliche Deckfeld 4 vor. Der Kantenabstand zwischen den Feldern 4, 5 kann bei 2mm liegen. Gegenseitige Soll-Ausrichtungen der Materialteile2 2, 3 können alle diejenigen Ausrichtungen sein, in welchen das Feld 5 in Ansicht nicht über den Rand des Lagenteiles 3 vorsteht bzw. freiliegend bleibt, wie das auch der Fall ist, wenn durch die Einrichtung 1 überhaupt kein Lagenteil 3 an die Trägerbahn 2 übergeben worden ist. Alle übrigen Ist-Lagen bzw. Ist-Ausrichtungen des Lagenteiles 3 gegenüber der Trägerbahn 2, nämlich wenn der Lagenteil 3 das Fügefeld 5 nicht vollständig abdeckt, sind Fehl-Lagen bzw. Fehl-Ausrichtungen, die selbstätig im Durchlauf erkannt werden sollen. Hierfür ist mindestens eine der Marken 6 und/oder der Marken 6a so angeordnet, daß sie in allen Soll-Lagen vom Lagenteil 3 gemäß Fig. 4 abgedeckt ist. Fehlt der Lagenteil 3 gemäß Fig. 3 ganz, so liegt diese Marke 6, 6a frei und kann erfaßt werden. Liegt der Lagenteil 3 quer und/oder längs gegenüber dem Feld 4 bzw. 5 versetzt oder gemäß Fig. 5 in seiner Fläche verdreht, so liegt diese Marke ebenfalls frei und es kann automatisch diese Fehl-Lage erfaßt werden.

Die Einrichtung 1 dient zur Anordnung auf der Oberseite eines Boden- bzw. Sockelgestelles, auf das sie als vormontierte Einheit quer zur Laufrichtung und horizontal aufgeschoben, dann gegenüber dem Sockelgestell verriegelt sowie schließlich mit Antrieben und Steuerleitungen verbunden wird, um betriebsbereit zu sein. In Längsrichtung des Sockelgestelles können dabei mehrere solche Einheiten für unterschiedliche Bearbeitungen der Trägerbahn 2 im Abstand hintereinander vorgesehen sein, und die Trägerbahn 2 kann über diese Einheiten durchgehend unter Zugspannung stehen.

Die Einrichtung 1 weist zum Auflegen des Lagenteiles 3 auf die Trägerbahn 2 im Bereich einer linienförmigen Fügestelle 8 eine Fügestation 7 und zur positionsgerechten Übergabe des Lagenteiles 3 an die Station 7 eine Übergabevorrichtung 9 auf. Die Trägerbahn 2 läuft über ihre Breite flachgestreckt in einer wenigstens im Querschnitt durch die Bahn 2 horizontalen Zuführ- bzw. Förder-Ebene 10 und der Lagenteil 3 wird der Fügestation 7 in einer entsprechenden Ebene 11 zugeführt, die der Auflagenseite der Trägerbahn 2 parallel zur Ebene 10 gegenüberliegt und oberhalb der Ebene 10 vorgesehen ist. Die Trägerbahn 2 wird durch eine vor der Einrichtung 1 beginnende und nach ihr fortgesetzte Förderbahn 13 der Fügestelle 8 zugeführt und ab dieser gemeinsamen mit den Lagenteilen 3 wieder weggeführt. Die Laufrichtung 14 der Trägerbahn 2 ist der Zuführrichtung 15 der Lagenteile 3 im Bereich der Ebene 11 entgegengerichtet.

Die Einrichtung 1 weist ein an dem Sockelgestell lagefest anzuordnendes Gestell 16 mit zwei seitlich außerhalb der Arbeitsbreite der Einrichtung 1 stehenden Wangen 17 auf, die über Querverstrebungen, Läufer und dergleichen miteinander verbunden sind, sowie die Lager für die zwischen ihnen liegenden Läufer tragen können. An der Außenseite einer der Wangen 17 werden die Läufer mit dem Gesamt-Antrieb der Fertigungsstraße bzw. mit einer durchgehenden Haupt-Antriebswelle antriebsverbunden.

Die Übergabevorrichtung 9 weist einen Übergabeläufer 18 auf, der als hohle Saugwalze die Lagenteile 3 nacheinander von der Zuführung 22 übernimmt und über eine Bogenbahn unmittelbar mit der Trägerbahn 2 an der Fügestelle 8 zuführt. Unterhalb des Läufers 18 liegt ein zu diesem achsparallel drehender Gegenläufer 19, dessen Umfangsfläche die Gegendruckfläche für den Umfang des Läufers 18 bildet und mit diesem einen Durchlaufspalt 20 begrenzt, welchen die Materialteile 2, 3 durchlaufen. Die engste Stelle des nach beiden Seiten keilförmig erweiterten Zuführspaltes 20 bildet die Fügestelle 8, die in der zur Ebene 10 bzw. 11 rechtwinkeligen Axialebene 12 der Läufer 18, 19 liegt.

Die Zuführung 22 führt die Lagenteile 3 dem Läufer 18 über eine Positioniervorrichtung 21 zu, dessen Positionierläufer 23 mit seinem Umfang auf der vom Läufer 19 abgekehrten Seite mit dem Umfang des Läufers 18 unter Bildung eines weiteren Durchlaufspaltes zusammenarbeitet. Sind die Lagenteile 3 von einer Lagenteilbahn abzutrennen, so kann unmittelbar benachbart zum Läufer 18 am Ende der Zuführung 22 eine Trennvorrichtung 24, z. B. am Umfang des Läufers 23 ein Messer, vorgesehen sein, das mit einem feststehenden Gegenmesser beim Umlauf zusammenarbeitet. Das Gegenmesser bildet eine annähernd bis zum Umfang des Läufers 18 bzw. bis zur Übergabestelle zwischen den Läufer 18, 23 reichende Führung für die Lagenteile 3. Diese werden dem Läufer 18 in Abhängigkeit vom Abstand des jeweils zu belegenden Feldes 4, 5 von der Fügestelle 8 tangential übergeben. Der Läufer 18 kann dabei mit kontinuierlicher Umfangsgeschwindigkeit drehen, die der Fördergeschwindigkeit des Materialteiles 2 gleich ist.

Zwischen den Ebenen 10, 11 enthält die Zuführung 22 mit ihren Umfängen ineinandergreifend einen Vorzugläufer 25 und einen Gegenläufer 26, deren Durchlaufspalt die Lagenteile 3 entgegen Richtung 14 zugeführt und von diesem zu einem darüberliegenden, angetriebenen Vorzugläufers 27 geführt werden. Entlang dessen, wie im Falle des Läufers 18 als Saugfläche ausgebildeten, Umfang werden die Lagenteile 3 in die Ebene 11 überführt. Diese schließt mit dem Gleittisch der Trennvorrichtung 24 etwa tangential an den Umfang des Läufers 18 an.

In Drehrichtung unmittelbar nach der Fügestelle 8 und vor der Übergabezone zwischen den Läufern 18, 23 ist eine Reinigungsvorrichtung 28 für den Umfang des Läufers 18 vorgesehen, z. B. eine über die Arbeitsbreite reichende Bürstenwalze. Eine entsprechende, ebenfalls unmittelbar an dem Umfang angreifende Bürstenwalze oder dergleichen kann für den Läufer 23 vorgesehen sein, um evtl. anhaftende Haftmittelreste des Fügefeldes 5 bei einem einzigen Durchlauf restlos zu entfernen. Die genannten Durchlaufspalte, insbesondere zwischen den Läufern 18, 19 und 18, 23, können mit Stellvorrichtungen 29 während des Durchlaufbetriebes schlagartig wesentlich aufgeweitet werden, indem für den jeweiligen Durchlaufspalt nur ein einziger Läufer 19 bzw. 23 mit einem beispielsweise hydraulischen Antrieb, radial abgehoben wird.

Ob der jeweilige Lagenteil 3 überhaupt oder lagegerecht auf dem zugehörigen Deckfeld 4 angeordnet ist, wird mit einer Erkennungs-Einrichtung 30 während des Durchlaufes der Materialteile 2, 3 in Richtung 14 unmittelbar nach der Fügestelle 8 und/oder der Zuführung 22 bzw. des Läufers 25 im Bereich von Erkennungsstellen 32 erfaßt, welche im Betrieb gegenüber dem Gestell 16 feststehend sind. Im Bereich jeder Erkennungsstelle ist ein Sensor 31 gegen die der Ebene 11 zugekehrte Oberseite der Trägerbahn 2 gerichtet, welcher eine in Richtung 14 vordere Marke 6a gemäß Fig. 3 und/oder eine in Richtung 14 hintere Marke 6a gemäß Fig. 5 dann erfaßt, wenn sie vom Lagenteil 3 nicht abgedeckt ist. Vom Sensor 31 führt eine Signalleitung 33 zu einer Vorrichtung 34 für die Signalverarbeitung und ggf. deren intermittierende Deaktivierung. Von der Verarbeitungseinheit 34 führt eine Signalleitung 35 zu einer Steuervorrichtung 36, welche durch Abschalten des Gesamt-Antriebes 37 aller die Trägerbahn 2 verarbeitenden Einrichtungen auch die Förderbewegungen der Materialteile 2, 3 stillsetzt. Der Antrieb kann auch eine auszurückende Kupplung oder dergleichen sein. Zur wahrnehmbaren Darstellung einer Fehl-Ausrichtung ist eine Anzeige 38 vorgesehen. Eine den vom Antrieb 37 bzw. den Marken 6, 6a beeinflußte Steuerleitung 42 bewirkt die intermittierende Aktivierung der Vorrichtung 34.

Der Sensor 31 ist mit einer Stellvorrichtung 40 parallel zur Ebene 10 und rechtwinkelig zur Richtung 14 über die Arbeitsbreite des Fügespaltes 8 verstellbar. Hierzu ist der Sensor 31 mit einem Schlitten 41 auf einer stabförmigen Führung 39 verschiebbar gelagert, welche die beiden Wangen 17 starr verbindet. In Fig. 2 ist erkennbar, wie in der Fügestelle 8 ein Fügefeld 5' und ein Lagenteil 3' in bestimmungsgemäß gegenseitiger Ausrichtung zulaufen, die dann durch Abwälzen in der Lage gemäß Fig. 4 an der Stelle 8 zusammengesetzt werden.

## Patentansprüche

1. Einrichtung zur Verarbeitung von Lagenmaterial durch lagegerechtes Zusammensetzen oder dergleichen von Materialteilen, wie eines Trägerteiles (2) und eines Lagenteiles (3), in gegenseitigen Ist-Ausrichtungen, die innerhalb eines Toleranzfeldes liegende Soll-Ausrichtungen von Solllagen im Bereich eines Deckfeldes (4) einschließen, mit mindestens einer Arbeitsstation und einer Fügestation (7) zum gegenseitigen Anlegen der Materialteile (2, 3) im Bereich einer Flügestelle (8) bzw. Fügeebene (12) durch Arbeitsbewegungen, **dadurch gekennzeichnet, dass** eine Erkennungsvorrichtung (30) zur Erfassung von gegenseitigen, von der Solllage abweichenden, Istlagen der Materialteile (2, 13) vorgesehen ist, und dass der gleiche Größe wie das Deckfeld (4) aufweisende Lagenteil (3) wesentlich kleiner als der Trägerteil (2) sowie seitlich von den Außenkanten des Trägerteiles (2) beabstandet ist, wobei die Erkennungsvorrichtung (30) ausschließlich ein gegenüber dem Deckfeld (4) kleineres sowie vollständig innerhalb des Deckfeldes (4) liegendes Feld (5) erfasst.

2. Einrichtung nach Anspruch 1, **dadurch gekennzeichnet, dass** eine eine Laufrichtung (14,15) bestimmende Förderbahn (13,22) für mindestens einen der Materialteile (2, 3) vorgesehen ist, die eine von der Fügestelle (8) weg führende Abführung für die zusammengesetzten Materialteile (2,3) enthält, und dass eine Erkennungsstelle (32) der Erkennungsvorrichtung (30) in Laufrichtung (14) nach der Fügestelle (8) zur Erfassung der Ausrichtung der bereits wenigstens teilweise zusammengesetzten Materialteile (2,3) vorgesehen ist.

3. Einrichtung nach Anspruch 1 oder 2, **dadurch gekennzeichnet, dass** die Erkennungsvorrichtung (30) einen auf die Erfassungsstelle (32) gerichteten Sensor (31) zur Erfassung einer gegenüber dem Fügefeld (5) lagebestimmten Bezugsstelle (6, 6a), insbesondere einen berührungsfrei abtastenden Detektor für Markierungen (6, 6a) des Trägerteils (2) aufweist.

4. Einrichtung nach einem der vorhergehenden Ansprüche, **dadurch gekennzeichnet, daß** Markierungen (6, 6a) zur Lagebestimmung der Ist-Ausrichtung des Lagenteiles (3) im Bereich von Randgrenzen bzw. innerhalb der Randgrenzen eines mit dem Lagenteil (3) abzudeckenden Deckfeldes (4) liegen und insbesondere parallel zu unmittelbar benachbarten Randgrenzen liegende Markierungslinien enthalten, und/oder daß das Deckfeld (4) ein Fügefeld (5), wie eine vor dem Zusammensetzen der Materialteile (2, 3) auf den gegenüber dem Fügefeld (5) flächengrößeren Trägerteil (2) aufgebrachte Haftbeschichtung, enthält und daß vorzugsweise Fügefeld-Markierungen (6a) näher zum Zentrum des Deckfeldes als dessen Randbegrenzungen (6) liegen.

5. Einrichtungen nach einem der vorhergenden Ansprüche, **dadurch gekennzeichnet, daß** die Fügestelle (8) unter Bildung eines Durchlaufspaltes (20) für die Materialteile (2, 3) von einem den Lagenteil (3) unter Umlenkung zuführenden und entgegen Laufrichtung (14) fortschreitend mit dem Trägerteil (2) verbindenden Übergabeläufer (18) sowie einem Gegenglied (19) gebildet ist, daß der Übergabeläufer (18) an einem Vorrichtungs-Gestell (16) gelagert ist und daß eine Erkennungsstelle (32) der Erkennungs-Vorrichtung unmittelbar benachbart zur Fügestelle (8) sowie in Seitenansicht im Bereich des Gestelles (16) vorgesehen ist.

6. Einrichtung nach einem der vorherigen Ansprüche, **dadurch gekennzeichnet, daß** ein Sensor (31) der Erkennungs-Vorrichtung (30) etwa parallel zur Fügeebene (10, 12) und/oder quer zur Laufrichtung (14) im wesentlichen über die gesamte Breite des Trägerteiles (2) stufenlos verstellbar und festsetzbar, insbesondere mit einem Schlitten (41) an einer Tragschiene (39) des Gestelles (16) geführt, ist.

7. Einrichtung nach einem der vorherigen Ansprüche, und **dadurch gekennzeichnet, daß** die Erkennungs-Vorrichtung (30) über eine Signalleitung (33, 35) mit einer Steuervorrichtung (36) für einen mindestens einen der Materialteile (2, 3) fördernden Antrieb (37), eine Anzeige (38) für den Erkennungs-Status oder dgl. verbunden ist.

8. Einrichtung nach einem der vorherigen Ansprüche, und **dadurch gekennzeichnet, daß** die Erkennungs-Vorrichtung (30) bei fortlaufenden Arbeitsbewegungen der Materialteile (2, 3) vom aktivierten Arbeitszustand in einen nichtaktivierten Blindzustand umschaltbar und insbesondere über eine vom Antrieb (37) der Einrichtung (1) beeinflußte Steuerleitung (42) zwischen den Durchläufen von aufeinander folgenden Deckfeldern (4) durch eine Erkennungsstelle (32) intermittierend in den Blindzustand umgesteuert ist.

9. Einrichtung nach einem der vorherigen Ansprüche, **dadurch gekennzeichnet, daß** zur Zuführung der Materialteile (2, 3) zur Fügestation (7) gesonderte Zuführebenen (10, 11) vorgesehen sind und ein Sensor (31) einer ErfassungsVorrichtung (30) zwischen diesen Ebenen (10, 11) liegt.

10. Einrichtung nach einem der vorherigen Ansprüche, **dadurch gekennzeichnet, daß** zur Zuführung der Materialteile (2, 3) zur Fügestation (7) in gegenseitig beabstandeten Zuführzonen entgegengesetzte Zuführ-Richtungen (14, 15) vorgesehen sind und daß ein Sensor (31) der ErfassungsVorrichtung (30) zwischen den Zuführzonen liegt.

## Claims

1. A means for processing ply material by correctly positioned collation or the like of material parts, such as a backing part (2) and a ply part (3), in orientations actual with respect to each other which include wanted orientations located within a tolerance field of wanted positions in the region of a cover field (4), having at least one work station and an affixation station (7) for applying said material parts (2,3) with respect to each other in the region of an affixation point (8) or affixation plane (12) by working movements, **characterized in that** a detector device (30) is provided for sensing actual positions of material parts (2, 3) departing from the wanted position with respect to each other, and that the ply part (3) having the same size as the cover field (4) is substantially smaller than the backing part (2) and is laterally spaced away from the outer edges of the backing part (2), the detector device (30) sensing exclusively a field (5) which is smaller than the cover field (4) and is totally located within the cover field (4).

2. The means as set forth in claim 1, **characterized in that** a conveying lane (13, 22) dictating a running direction (14, 15) is provided for at least one of the material parts (2, 3) which contains for the collated material parts (2, 3) a discharge leading away from the affixation point (8) and a detection point (32) of the detector device (30) is provided in the running direction (14) downstream of the affixation point (8) for sensing the orientation of the material parts (2, 3) already combined at least in part.

3. The means as set forth in claim 1 or 2, **characterized in that** the detector device (30) comprises a sensor (31) directed at the detection point (32) for sensing a reference point (6, 6a) in a fixed position with respect to the affixation field (5), particularly a non-contact scanning detector for markings (6, 6a) on the backing part (2).

4. The means as set forth in any of the preceding claims, **characterized in that** said markings (6, 6a) for positionally determining the actual orientation of said ply part (3) are located in the region of margins and/or within the margins of a cover field (4) to be covered by said ply part (3) and contain marking lines located in particular parallel to directly juxtaposed margins, and/or that said cover field (4) contains an affixation field (5) such as an adhesive coating applied to said backing part (2) larger in surface area with respect to said affixation field (5) prior to collation of said material parts (2, 3) and that in particular said affixation field markings (6a) are located nearer to the center of said cover field than said margins (6) thereof.

5. Means as set forth in any of the preceding claims, **characterized in that** said affixation point (8) is formed with formation of a nip (20) for the passage of said material parts (2, 3) from a transfer rotor (18) deflectingly feeding said ply part (3) and progressively connecting said backing part (2) counter to said running direction (14), said transfer rotor (18) is mounted on a device frame (16) and a detection point (32) of said detector device is provided directly juxtaposed to said affixation point (8) and in the region of said frame (16) when viewed from the said.

6. The means as set forth in any of the preceding claims, **characterized in that** a sensor (31) of said detector device (30) is guided roughly parallel to said affixation plane (10,12) and/or transversely to said running direction (14) substantially infinitely variable and fixedly locatable, particularly by a slider (41) to a carrying rail (39) of said frame (16).

7. The means as set forth in any of the preceding claims, **characterized in that** said detector device (30) is connected via a signal lead (33, 35) to a control device (36) for a drive (37) conveying at least one of said material parts (2,3), a display (38) for the detection status or the like.

8. The means as set forth in any of the preceding claims, **characterized in that** said detector device (30) is switchable with continuing working movements of said material parts (2, 3) from the activated working status into a non-activated blind status and in particular is signalled via a control lead (42) influenced by the drive (37) of the means (1) between the thruputs from cover fields (4) in sequence by a detection point (32) intermittently into said blind status.

9. The means as set forth in any of the preceding claims, **characterized in that** for feeding said material parts (2, 3) to said affixation station (7) separate feed planes (10, 11) are provided and a sensor (31) of a detector device (30) is located between said planes (10, 11).

10. The means as set forth in any of the preceding claims, wherein for feeding said material parts (2, 3) to said affication station (7) opposing feed directions (14, 15) are provided in mutually spaced feed zones and a sensor (31) of said detector device (30) is located beween said feed zone.

## Revendications

1. Moyen pour le traitement de matériaux en couche par un assemblage en position correcte ou similaire de pièces de matériel, telles que d'une pièce de support (2) et d'une pièce en couche (3), avec une orientation réelle réciproque, incluant des orientations nominales, situées à l'intérieur d'un champ de tolérance, des positionnements exigés dans le domaine d'un champ de recouvrement (4), avec au moins un poste de traitement et un poste d'assemblage (7) pour le placement réciproque des pièces de matériel (2, 3) dans le domaine d'un lieu d'assemblage (8) ou encore d'un plan d'assemblage (12) par des mouvements de travail, **caractérisé en ce que** un dispositif de reconnaissance (30) est prévu pour la détection de positions réelles des pièces de matériel (2, 3) s'écartant d'un positionnement exigé et **en ce que** la pièce en couche (3) présentant la même dimension que le champ de recouvrement (4) est en substance plus petit que la pièce de support (2) ainsi qu'elle présente un écart latéral des bords extérieurs de la pièce de support (2), le dispositif de reconnaissance (30) couvrant exclusivement un champ (5) plus petit par rapport au champ de recouvrement (4) ainsi que situé entièrement à l'intérieur du champ de recouvrement (4).

2. Moyen d'après la revendication 1, **caractérisé en ce que** une voie de transport (13, 22) est prévue, en déterminant un sens de marche (14, 15), pour au moins une des pièces de matériel (2, 3), lequel comprend une sortie s'éloignant de l'endroit d'assemblage (8) pour les pièces (2, 3) assemblées, et **en ce qu'**un endroit de détection (32) du dispositif de détection (30) est prévu en sens de marche (14) après l'endroit d'assemblage (8) pour la détection de l'orientation des pièces (2, 3) déjà assemblées au moins en partie.

3. Moyen d'après la revendication 1 ou 2, **caractérisé en ce que** le dispositif de détection (30) présente un organe sensitif (31) orienté en direction du lieu de détection (32) pour la détection d'un endroit de référence (6, 6a) présentant une position bien déterminée par rapport au champ d'assemblage (5), notamment un détecteur scrutant sans contact direct pour des repères (6, 6a) de la pièce de support (2).

4. Moyen d'après une des revendications précédentes, **caractérisé en ce que** des repères (6, 6a) pour la détermination d'état de l'orientation effective de la pièce en couche (3) se trouvant dans le domaine des délimitations de bord ou encore à l'intérieur des délimitations de bord d'un champ de recouvrement (4) qui est à recouvrir avec la pièce en couche (3), et qu'ils comprennent notamment des lignes de repérage situées parallèlement à des délimitations de bord directement limitrophes, et/ou **en ce que** le champ de recouvrement (4) comprend un champ d'assemblage (5) tel qu'un enduit adhérent appliqué avant l'assemblage des pièces (2, 3) sur la pièce de support (2) qui présente une surface plus grande par rapport au champ d'assemblage (5), et **en ce que** de préférence des repères de champ d'assemblage (6a) se trouvent plus proches du centre du champ de recouvrement par rapport aux délimitations de bord (6) de ce dernier.

5. Moyens d'après une des revendications précédentes, **caractérisé en ce que** l'endroit d'assemblage (8) est constitué, sous formation d'une fente de passage (20) pour les pièces de matériel (2, 3), d'un rouleau de transfert (18) admettant la pièce en couche (3) sous renvoi et la joignant à la pièce de support (2) en avançant en sens opposé au sens de marche (14), ainsi que d'un élément opposé (19), **en ce que** le rouleau de transfert (18) est logé auprès d'un bâti de dispositif (16) et **en ce qu'**un lieu de reconnaissance (32) du dispositif de reconnaissance est prévu de manière directement limitrophe à l'endroit d'assemblage (8) ainsi que dans le domaine du bâti (16) en projection latérale.

6. Moyen d'après une des revendications précédentes, **caractérisé en ce qu'**un organe sensitif (31) du dispositif de reconnaissance (30) peut être progressivement ajusté et fixé de manière à peu près parallèle au plan d'assemblage (10, 12) et/ou transversale par rapport au sens de marche (14) essentiellement sur toute la longueur de la pièce de support (2), et conduit notamment au moyen d'un chariot (41) auprès d'une barre de support (39) du bâti (16).

7. Moyen d'après une des revendications précédentes, et **caractérisé en ce que** le dispositif de reconnaissance (30) est raccordé au moyen d'une ligne de signalisation (33, 35) avec un dispositif de commande (36) pour un mécanisme d'entraînement (37) transportant au moins une des pièces (2, 3), et avec un affichage (38) signalant l'état de reconnaissance ou similaire.

8. Moyen d'après une des revendications précédentes, et **caractérisé en ce que** le dispositif de reconnaissance (30) peut être commuté d'un état de travail activé dans un état aveugle non-activé sous continuation des mouvements de travail des pièces (2, 3) et qu'il peut être notamment mis dans l'état aveugle de manière intermittente au moyen d'une ligne de commande (42) influencée par le mécanisme d'entraînement (37) du moyen (1), entre les passages des champs de recouvrement (4) consécutifs à travers un lieu de reconnaissance (32).

9. Moyen d'après une des revendications précédentes, **caractérisé en ce que** pour un apport des pièces (2, 3) à la station d'assemblage (7) sont prévus des plans d'apport (10, 11) individuels et qu'un organe sensitif (31) d'un dispositif de détection (30) se trouve entre ces plans (10, 11).

10. Moyen d'après une des revendications précédentes, **caractérisé en ce que** pour un apport des pièces (2, 3) à la station d'assemblage (7) sont prévues des directions d'apport (14, 15) opposées dans des zones d'apport écartées entre elles et **en ce que** un organe sensitif (31) du dispositif de détection (30) se trouve entre les zones d'apport.
